# EUROPÄISCHE PATENTSCHRIFT

(11) **EP 2 317 190 B1**
(45) Veröffentlichungstag und Bekanntmachung des Hinweises auf die Patenterteilung: **04.07.2012**
(21) Anmeldenummer: 10405200.6
(22) Anmeldetag: 22.10.2010
(51) Int. Cl.: F16K 27/00, F16K 31/05

(54) **Schliessmassadapter**
Adapter for valves with different sizes
Adaptateur pour vannes à tailles différentes

(30) Priorität: 27.10.2009 CH 16472009
(43) Veröffentlichungstag der Anmeldung: 04.05.2011
(73) Patentinhaber: Unovatis GmbH, 38229 Salzgitter (DE)
(72) Erfinder: Kernen, Roland, 4132 Muttenz (CH)
(74) Vertreter: Bohest AG

(56) Entgegenhaltungen:
- EP-A1- 1 950 476
- DE-U1- 29 905 078
- DE-U1-202006 013 186
- FR-A1- 2 333 182

## Beschreibung

Die vorliegende Erfindung betrifft einen Schliessmassadapter zum Ausgleich von in Ventilbetätigungsrichtung unterschiedlichen Schliessmassen von Ventilen, mit einem auf einem Ventil befestigbaren Befestigungsring. Ein solcher Schliessmassadapter kann zwischen einem Ventil und einem Ventilantrieb zum Einstellen des Abstands zwischen dem Ventilantriebsitz und dem Ventil eingesetzt werden.

In verschiedenen technischen Gebieten, wie beispielsweise in der Heizungs-, Lüftungs- und Klimatechnik (HLK), werden Ventile für die Durchflussregelung eingesetzt. Die verwendeten Ventile weisen häufig eine aus einem Gehäuse ragende Betätigungsspindel auf, die über eine bestimmte Strecke bewegbar ist. Die Betätigungsspindel ist mit einem Verschlussorgan verbunden, wie beispielsweise einem bei einer Durchflussöffnung angeordneten Teller, der die Durchflussöffnung dicht abschliesst, wenn er an ihr anliegt. Weiter wirkt auf die Betätigungsspindel eine Ventilrückstellfeder, mit welcher die Betätigungsspindel in einer Normalstellung, in der keine Kraft von aussen auf die Betätigungsspindel wirkt, aus dem Gehäuse gedrückt wird. Typischerweise sind die Ventile so ausgestaltet, dass sie in dieser Normalstellung entweder geschlossen oder geöffnet sind. Zur Betätigung eines solchen Ventils wird die Betätigungsspindel entgegen der Federkraft der Ventilrückstellfeder in das Gehäuse gedrückt und damit das Verschlussorgan so bewegt, dass das Ventil geöffnet bzw. geschlossen wird.

Zum automatisierten Betätigen solcher Ventile werden heutzutage verschiedene Ausführungen von Ventilantrieben eingesetzt. Beispielsweise umfasst ein solcher Ventilantrieb ein linear verstellbares Hubteil, einen strombetriebenen Hubteilantrieb sowie eine Rückstellfeder. Das Hubteil ist mit der Betätigungsspindel des Ventils wirkungsmässig verbunden. Wenn der Hubteilantrieb mit Strom beaufschlagt wird, bewirkt dies, dass das Hubteil von einer ersten Endposition in eine zweite Endposition verstellt wird, und die Rückstellfeder gespannt wird. Die Federkraft der Rückstellfeder ist dabei grösser ausgelegt als die Federkraft der Ventilrückstellfeder, so dass das Hubteil die Betätigungsspindel in das Gehäuse des Ventils drückt, wenn der Hubteilantrieb nicht mit Strom beaufschlagt wird.

Ventile der oben beschriebenen Art werden heutzutage in zahlreichen verschiedenen Ausführungen vertrieben. Für die Ausgestaltung entsprechender Ventilantriebe ist dabei unter anderem problematisch, dass die Schliessmasse der Ventile nicht normiert sind. Unter Schliessmass wird hier der Abstand zwischen dem aus dem Gehäuse ragenden Längsende der Betätigungsspindel und der Auflagefläche des Gehäuses im offenen bzw. geschlossenen Zustand des Ventils verstanden. Wird ein Ventilantrieb verwendet, der nicht auf das Schliessmass des entsprechenden Ventils angepasst ist, kann mit dem Ventilantrieb beispielsweise die Betätigungsspindel nicht über ihre ganze Betätigungsstrecke bewegt werden und/oder der Ventilantrieb bewegt sich massgeblich in einem Bereich, in dem die Betätigungsspindel nicht bewegt wird (Leerhub), bzw. das Ventil kann nicht ganz geöffnet oder geschlossen werden. Um einen optimalen Betrieb des Ventils mittels eines Ventilantriebs gewährleisten zu können, werden die Ventilantriebe heutzutage teilweise auf einzelne Ventiltypen angepasst, was einen erheblichen Aufwand bei der Produktion, beim Vertrieb und bei der Logistik von Ventilantrieben für verschiedene Ventile nach sich zieht.

Wie beispielsweise in der DE 299 05 078 U beschrieben, wird diesem Problem heutzutage begegnet, indem Ventilantriebe jeweils universell ausgebildet und zusammen mit einem Adapter vertrieben werden, der einer spezifischen Ausgestaltung eines Ventils angepasst ausgestaltet ist, so dass ein einziger Ventilantrieb über verschiedene Adapter auf verschiedene Typen von Ventilen montierbar ist und gleichzeitig ein optimaler Betrieb dieser verschiedenen Typen von Ventilen gewährleistet werden kann. Ein Nachteil solcher Ventilantriebe und Adapter ist, dass die Adapter wiederum auf einzelne Ventiltypen angepasst werden müssen, was einen erheblichen Aufwand bei der Produktion, beim Vertrieb und bei der Logistik von Ventilantrieben für verschiedene Ventile nach sich zieht. Ausserdem kann es bei der Montage zu Verwechslungen der Adapter kommen, so dass nur ein ungenügender Betrieb des Ventils ermöglicht oder ein zuverlässiger Betrieb des Ventils ganz verunmöglicht wird.

Der vorliegenden Erfindung liegt daher die Aufgabe zugrunde, einen Schliessmassadapter zu schaffen, mit welchem verschiedene Typen von Ventilen optimal betätigt werden können und der einfach und sicher auf verschiedenen Typen von Ventilen montierbar ist.

Diese Aufgabe wird durch den erfindungsgemässen Schliessmassadapter gelöst, wie er im unabhängigen Patentanspruch 1 definiert ist. Der unabhängige Verwendungsanspruch definiert eine Verwendung des erfindungsgemässen Schliessmassadapters. Vorteilhafte Ausführungsvarianten ergeben sich aus den abhängigen Patentansprüchen.

Das Wesen der Erfindung besteht darin, dass der erfindungsgemässe Schliessmassadapter zum Ausgleich von in Ventilbetätigungsrichtung unterschiedlichen Schliessmassen von Ventilen einen auf einem Ventil befestigbaren Befestigungsring und einen Ausgleichsring umfasst, der einen Ventilantriebsitz für einen Ventilantrieb aufweist. Der Ausgleichsring ist in Ventilbetätigungsrichtung verstellbar mit dem Befestigungsring verbunden, so dass der Abstand zwischen dem Ventilantriebsitz und dem Ventil einstellbar ist. Der Schliessmassadapter umfasst Mittel zur Fixierung der gegenseitigen Position von Ausgleichsring und Befestigungsring.

Die Einstellbarkeit des Abstands zwischen dem Ventilantriebsitz und dem Ventil ermöglicht unterschiedliche Schliessmasse von Ventilen unterschiedlicher Hersteller auf einfache Art und Weise auszugleichen. Die Mittel zur Fixierung der gegenseitigen Position von Ausgleichsring und Befestigungsring sorgen dafür, dass ein einmal eingestellter Schliessmassausgleich auch so eingestellt bleibt und nicht mehr geändert wird.

Vorzugsweise weist beim erfindungsgemässen Schliessmassadapter der Befestigungsring zur Befestigung auf dem Ventil ein Gewinde auf. Da die meisten Ventile ein Gewinde zur Montage von Ventilantrieben ausweisen, erlaubt ein Befestigungsring mit Gewinde eine sicnere Befestigung des Schliessmassadapters auf dem jeweiligen Ventil. Alternativ können Ventile und Schliessmassadapter auch mit einem Bajonett- oder Schnappverschluss ausgestattet sein.

Mit Vorteil ist beim erfindungsgemässen Schliessmassadapter der Ausgleichsring in Ventilbetätigungsrichtung über eine schiefe Ebene verstellbar mit dem Befestigungsring verbunden. Die schiefe Ebene erlaubt auf einfache Art und Weise, den Abstand zwischen dem Ventilantriebsitz und dem Ventil in Ventilbetätigungsrichtung stufenlos einzustellen.

Vorteilhafterweise sind beim erfindungsgemässen Schliessmassadapter der Ausgleichsring und der Befestigungsring über kooperierende Gewinde oder Vorsprünge miteinander verschraubbar. Kooperierende Gewinde oder Vorsprünge bilden eine einfache Lösung, um eine schiefe Ebene zu realisieren. Dabei kann beispielsweise am Ausgleichsring ein Innengewinde und am Befestigungsring ein Aussengewinde angeordnet sein. Auch kann der Ausgleichsring ein Gewinde und der Befestigungsring Vorsprünge aufweisen, die in das Gewinde eingreifen, oder umgekehrt. Idealerweise umfasst das Gewinde in einer Ausgangsposition auf dem Befestigungsring, in welcher der Abstand zwischen Ventilantriebsitz und Ventil maximal ist, ein Haltemittel, derart, dass eine etwas höhere Kraft erforderlich ist, um den Ausgleichsring bezüglich dem Befestigungsring aus der Ausgangsposition herauszudrehen. Dadurch kann ein Monteur den Schliessmassadapter auf das Ventil aufsetzen und lediglich durch Drehen am Ausgleichsring den Befestigungsring mit dem Ventil verschrauben, da der Ausgleichsring durch das Haltemittel relativ zum Befestigungsring gehalten wird. Ist der Befestigungsring korrekt auf dem Ventil montiert, so bewirkt ein weiteres Drehen am Ausgleichsring mit erhöhter Kraft, dass der Ausgleichsring das Haltemittel überwindet und nun der Schliessmassausgleich eingestellt werden kann.

Vorzugsweise umfasst der erfindungsgemässe Schliessmassadapter eine in Ventilbetätigungsrichtung verstellbare Druckkappe zur Ventilbetätigung. Die Druckkappe ist nach dem Einstellen des Abstands zwischen dem Ventilantriebsitz und dem Ventil in Ventilbetätigungsrichtung verstellbar. Die Druckkappe ermöglicht eine einfache Weitergabe der jeweiligen Verstellung des Ventilantriebs auf eine Betätigungsspindel des Ventils.

Mit Vorteil ist beim erfindungsgemässen Schliessmassadapter die Druckkappe relativ zum Befestigungsring verdrehsicher angeordnet und weist der Schliessmassadapter Mittel auf, die nach dem Einstellen der gewünschten gegenseitigen Position von Ausgleichsring und Befestigungsring ein Verdrehen des Ausgleichsrings relativ zu der Druckkappe und dem Befestigungsring verhindern. Diese Mittel sind vorzugsweise mindestens teilweise an der Druckkappe ausgebildet. Dadurch kann der erfindungsgemässe Schliessmassadapter aus relativ wenig Einzelteilen gefertigt werden.

Vorteilhafterweise weist beim erfindungsgemässen Schliessmassadapter die Druckkappe axiale Führungsrillen und der Ausgleichsring gleichmässig angeordnete Vorsprünge in radialer Richtung auf, die nach dem Einstellen der gewünschten gegenseitigen Position von Ausgleichsring und Befestigungsring in die axialen Führungsrillen der Druckkappe eingreifen. Axiale Führungsrillen in der Druckkappe und darin eingreifende Vorsprünge des Ausgleichsrings sind eine einfache Lösung, um die Fixierung der gegenseitigen Position von Ausgleichsring und Befestigungsring zu erreichen, da die Druckkappe und der Befestigungsring relativ zueinander verdrehsicher ausgebildet sind.

Vorzugsweise weist beim erfindungsgemässen Schliessmassadapter die Druckkappe mindestens einen nach aussen ragenden Vorsprung auf, der ein Herausfallen der Druckkappe aus dem Schliessmassadapter verhindert. Der mindestens eine nach aussen ragende Vorsprung hintergreift in einer Ausgangsposition die gleichmässig angeordneten Vorsprünge in radialer Richtung des Ausgleichsrings und verhindert so ein Herausfallen der Druckkappe aus dem Schliessmassadapter.

Wie bereits zuvor beschrieben, kann durch Drehen am Ausgleichsring der Befestigungsring auf dem Ventil befestigt werden. Ist der Befestigungsring korrekt auf dem Ventil montiert, so bewirkt ein weiteres Drehen am Ausgleichsring, dass der Ausgleichsring die Ausgangsposition bezüglich des Befestigungsrings verlässt, wodurch der Abstand zwischen dem Ventilsitz und dem Ventil eingestellt werden kann. Hierbei wird der Ausgleichsring auf den Befestigungsring in Ventilbetätigungsrichtung aufgedreht. Die Druckkappe, die durch den mindestens einen nach aussen ragenden Vorsprung am Herausfallen aus dem Ausgleichsring gehindert wird, wird in Ventilbetätigungsrichtung verstellt. Trifft die Druckkappe bei diesem Verstellen auf die Betätigungsspindel des Ventils, so wird die Betätigungsspindel in das Ventil gedrückt bzw. aus ihrer Normalstellung in eine Endstellung verstellt. Sobald die Betätigungsspindel die Endstellung erreicht hat, ist das Ventil seinerseits geöffnet bzw. geschlossen und die Betätigungsspindel kann nicht mehr weiter in Ventilbetätigungsrichtung verstellt werden. Ein weiteres Drehen am Ausgleichsring über den Widerstand des nach ausser ragenden Vorsprungs und der gleichmässig angeordneten Vorsprünge in radialer Richtung des Ausgleichsrings hinweg aus dem Ausgleichsring bewirkt nun, dass die Druckkappe nach Überwinden einer gewissen Kraft bzw. eines definierten Widerstands über die gleichmässig angeordneten Vorsprünge des Ausgleichsrings hinweg herausgedrückt wird. Die gleichmässig angeordneten Vorsprünge in radialer Richtung des Ausgleichsrings greifen neu in die axialen Führungsrillen der Druckkappe ein und Verhindern ein Verdrehen des Ausgleichsrings relativ zu der Druckkappe und dem Befestigungsring. Der Schliessmassausgleich ist nun korrekt eingestellt und fixiert. Es handelt sich hierbei um einen halbautomatischen Vorgang, da der Monteur den Ausgleichsring manuell auf den Befestigungsrichtung aufdreht, der Schliessmassausgleich schliesslich aber automatisch eingestellt wird.

Mit Vorteil weist beim erfindungsgemässen Schliessmassadapter der Ausgleichsring als Ventilantriebsitz einen Kragen auf. Der Kragen erlaubt auf einfache Art und Weise den Ventilantrieb auf dem Schliessmassadapter anzubringen. Alternativ könnte der Ventilantrieb auch über einen Bajonett- oder Schnappverschluss mit dem Schliessmassadapter verbunden werden und der Schliessmassadapter einen entsprechend angepassten Ventilantriebsitz aufweisen.

Ein weiterer Aspekt der Erfindung betrifft die Verwendung des mit einem Ventilantriebsitz versehenen erfindungsgemässen Schliessmassadapters zwischen einem Ventil und einem Ventilantrieb zum Einstellen des Abstands zwischen dem Ventilantriebsitz und dem Ventil. Die Verwendung eines erfindungsgemässen Schliessmassadapters ermöglicht durch die Einstellbarkeit des Abstands zwischen dem Ventilantriebsitz und dem Ventil unterschiedliche Schliessmasse von Ventilen unterschiedlicher Hersteller auf einfache Art und Weise auszugleichen. Somit reduziert sich die Anzahl an Lager zu haltenden Adaptertypen drastisch.

Im Folgenden werden der erfindungsgemässe Schliessmassadapter sowie eine erfindungsgemässe Verwendung eines solchen Schliessmassadapters unter Bezugnahme auf die beigefügten Zeichnungen anhand eines Ausführungsbeispiels detaillierter beschrieben. Es zeigen:
- Fig. 1 -: ein Ausführungsbeispiel eines erfindungsgemässen Schliessmassadapters mit einem Befestigungsring, einem Ausgleichsring und einer Druckkappe in einer Perspektivenansicht;
- Fig. 2 -: den Schliessmassadapter von Fig. 1 in einer Schnittansicht;
- Fig. 3 -: den Schliessmassadapter von Fig. 1 in einer Drauf- sicht;
- Fig. 4 -: die Druckkappe des Schliessmassadapters von Fig. 1 in einer Frontansicht;
- Fig. 5 -: die Druckkappe des Schliessmassadapters von Fig. 1 in einer Draufsicht;
- Fig. 6 -: den Befestigungsring des Schliessmassadapters von Fig. 1 in einer Frontansicht;
- Fig. 7 -: den Befestigungsring des Schliessmassadapters von Fig. 1 in einer Draufsicht;
- Fig. 8 -: den Ausgleichsring des Schliessmassadapters von Fig. 1 in einer Frontansicht;
- Fig. 9 -: den Ausgleichsring des Schliessmassadapters von Fig. 1 in einer Draufsicht;
- Fig. 10 -: eine Verwendung des Schliessmassadapters von Fig. 1 an einem Ventil in einer Schnittansicht; und
- Fig. 11 -: das Ventil und den Schliessmassadapter von Fig. 10 mit einem auf dem Schliessmassadapter angeordneten Ventilantrieb in einer teilweise geschnittenen An- sicht.

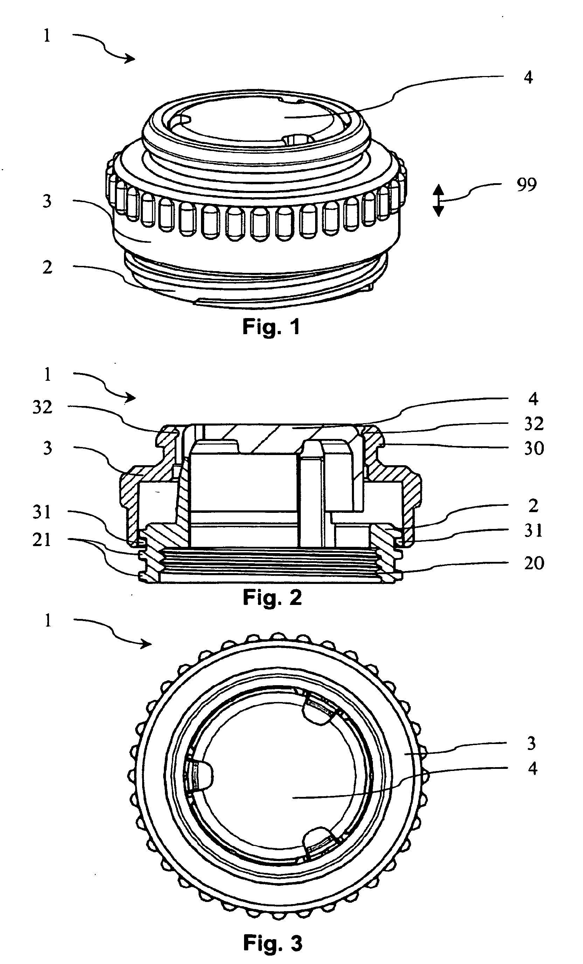

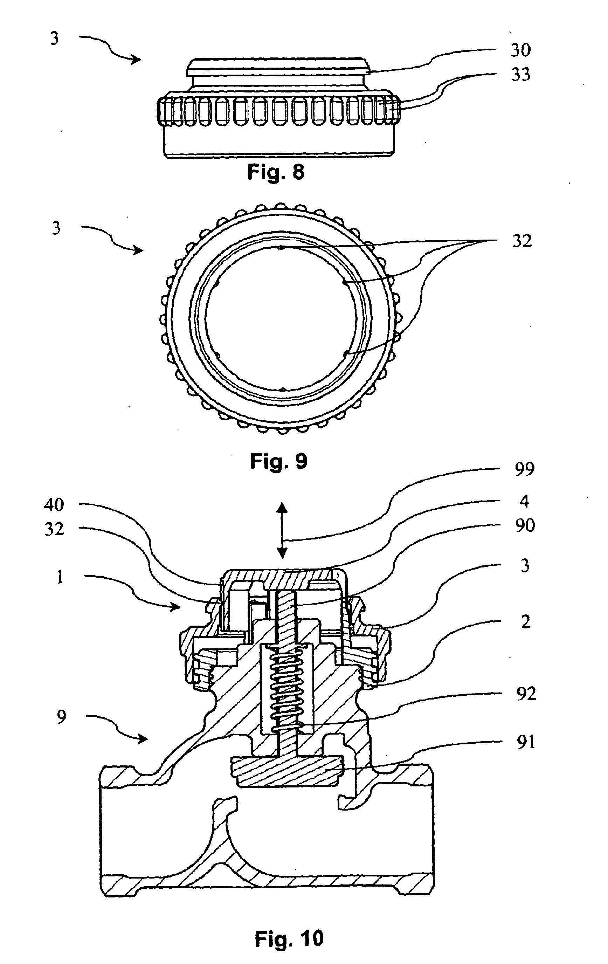

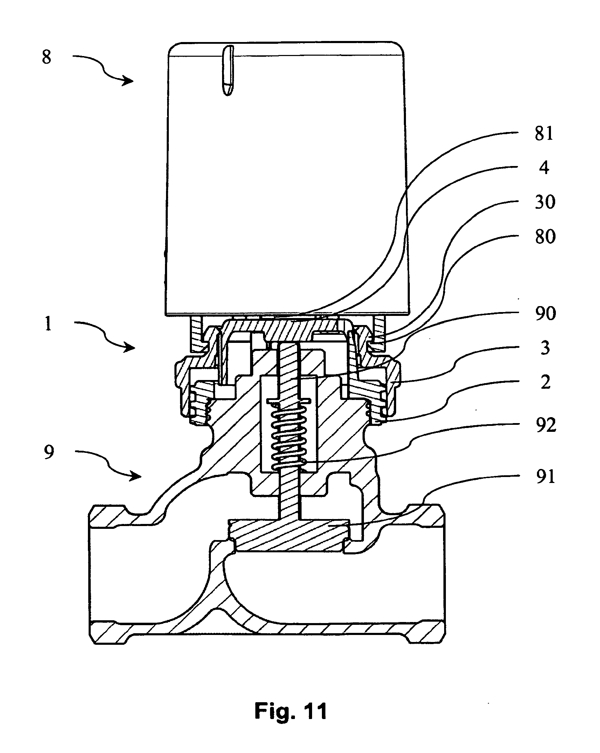

Fig. 1 bis 3 zeigen ein Ausführungsbeispiel eines erfindungsgemässen Schliessmassadapters 1, wobei die unterschiedlichen Figuren verschiedene Ansichten zeigen. Der Schliessmassadapter 1 zum Ausgleich von in Ventilbetätigungsrichtung unterschiedlichen Schliessmassen von Ventilen 9 (siehe Fig. 10) umfasst einen auf einem Ventil befestigbaren Befestigungsring 2 und einen Ausgleichsring 3, der einen Kragen 30 als Ventilantriebsitz für einen Ventilantrieb 8 (siehe Fig. 11) aufweist und in Ventilbetätigungsrichtung 99 verstellbar mit dem Befestigungsring 2 verbunden ist.

Der Befestigungsring 2 weist zur Befestigung auf dem Ventil ein Gewinde 20 auf. Der Ausgleichsring 3 und der Befestigungsring 2 sind miteinander über zwei Vorsprünge 31 am Ausgleichsring 3 und ein Gewinde 21 am Befestigungsring 2 verschraubbar, wobei die zwei Vorsprünge 31 in das Gewinde 21 eingreifen.

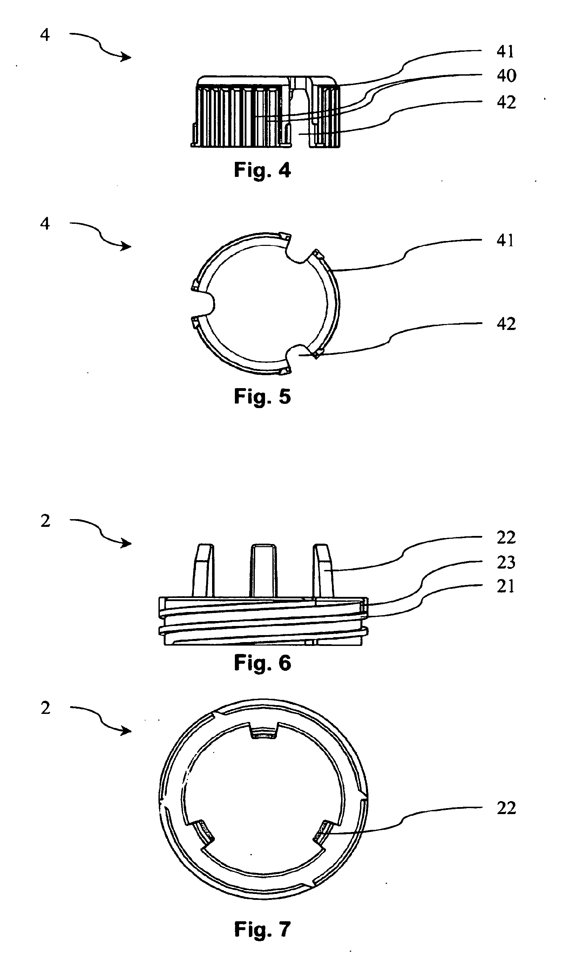

Der Schliessmassadapter 1 umfasst eine in Ventilbetätigungsrichtung 99 verstellbare Druckkappe 4 zur Ventilbetätigung. Die Druckkappe 4 ist relativ zum Befestigungsring 2 verdrehsicher angeordnet, wird unten im Zusammenhang mit Fig. 4 und 5 erläutert und weist Mittel auf, die nach dem Einstellen der gewünschten gegenseitigen Position von Ausgleichsring 3 und Befestigungsring 2 ein Verdrehen des Ausgleichsrings 3 relativ zu der Druckkappe 4 und dem Befestigungsring 2 verhindern. Zu diesem Zweck weisen die Druckkappe 4 auf Ihrer Aussenseite axiale Führungsrillen 40 (siehe Fig. 4) und der Ausgleichsring 3 in radialer Richtung nach aussen ragende gleichmässig angeordnete Vorsprünge 32 auf, die nach dem Einstellen der gewünschten gegenseitigen Position von Ausgleichsring 3 und Befestigungsring 2 und Überwinden eines definierten Widerstands in die axialen Führungsrillen 40 der Druckkappe eingreifen und dadurch den Schliessmassausgleich fixieren. Die Druckkappe 4 weist mindestens einen nach aussen ragenden Vorsprung 41 (siehe Fig. 4) auf, der die in radialer Richtung gleichmässig angeordneten Vorsprünge 32 des Ausgleichsrings 3 hintergreift und ein Herausfallen der Druckkappe 4 aus dem Schliessmassadapter 1 verhindert.

Der Befestigungsring 2, der Ausgleichsring 3 und die Druckkappe 4 sind beispielsweise aus einem Kunststoff, z. B. Polyamid, gefertigt.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erläutert, so wird auf deren Erwähnung in vorangehenden Figurenbeschreibungen Bezug genommen.

Fig. 4 und 5 zeigen die Druckkappe 4 des Schliessmassadapters 1 in verschiedenen Ansichten. Die Druckkappe 4 weist Aussparungen 42 auf, in die Schwerter 22 (siehe Fig. 6 oder 7) des Befestigungsrings 2 derart eingreifen, dass die Druckkappe 4 relativ zum Befestigungsring 2 verdrehsicher angeordnet ist.

Fig. 6 und 7 zeigen den Befestigungsring 2 in verschiedenen Ansichten. Am Befestigungsring 2 ist noch ein Haltenocken 23 als Haltemittel erkennbar, dessen Funktion unten näher beschrieben wird.

Fig. 8 und 9 zeigen den Ausgleichsring 3 in verschiedenen Ansichten. Der Ausgleichsring 3 weist nach aussen weisende Vorsprünge 33 auf, die einem Monteur ein Drehen des Ausgleichsrings 3 erleichtern.

Fig. 10 und 11 zeigen die Verwendung des mit dem Ventilantriebsitz 30 versehenen Schliessmassadapters 1 zwischen dem Ventil 9 und dem Ventilantrieb 8 zum Einstellen des Abstands zwischen dem Ventilantriebsitz 30 und dem Ventil 9. Das Ventil 9 weist eine Betätigungsspindel 90 auf, an der die Druckkappe 4 anliegt. Die Betätigungsspindel 90 ist mit einem Teller 91 als Verschlussorgan verbunden, der eine Durchflussöffnung des Ventils 9 dicht abschliesst, wenn er an dieser anliegt. Weiter wirkt auf die Betätigungsspindel eine in Fig. 11 vorgespannte Ventilrückstellfeder 92 in Richtung auf die Druckkappe 4 hin. Bei dem in Fig. 11 gezeigten Zustand befindet sich das Ventil 9 in einem geschlossenen Zustand, in dem der Teller 91 die Durchflussöffnung des Ventils 9 dicht verschliesst.

Der Ventilantrieb 8, beispielsweise ein strombetriebener thermischer Ventilantrieb, weist an seinem Gehäuse Befestigungsvorsprünge 80 auf, die dem Kragen 30 als Ventilantriebsitz des Schliessmassadapters 1 hintergreifen. Der Ventilantrieb 8 weist ausserdem ein Hubteil 81 auf, das an der Druckkappe 4 anliegt. Er verstellt die Betätigungsspindel 90 des Ventils 9 via die Druckkappe 4 durch Einfahren bzw. Ausfahren des Hubteils 81.

Fig. 10 zeigt den Schliessmassadapter 1 nach erfolgter Montage auf dem Ventil 9. Zur Montage wird der Schliessmassadapter 1 auf das Ventil 9 aufgesetzt und durch Drehen am Ausgleichsring 3 wird der Befestigungsring 2 auf das Ventil 9 aufgeschraubt, da der Haltenocken 23 am Befestigungsring 2 bewirkt, dass der Ausgleichsring 3 in einer Ausgangsposition verdrehsicher mit dem Befestigungsring 2 verbunden ist, bis der Befestigungsring 2 vollständig auf das Ventil 9 aufgeschraubt ist. Anschliessend bewirkt ein weiteres Drehen am Ausgleichsring 3 mit erhöhter Kraft, dass der Ausgleichsring 3 den Haltenocken 23 in der Ausgangsposition überwindet und nun der Schliessmassausgleich eingestellt werden kann. Hierbei wird der Ausgleichsring 3 auf den Befestigungsring 2 aufgedreht. Die Druckkappe 4, die durch den mindestens einen nach aussen ragenden Vorsprung 41 am Herausfallen aus dem Ausgleichsring 3 gehindert wird, wird dadurch in Ventilbetätigungsrichtung 99 verstellt. Trifft die Druckkappe 4 bei diesem Verstellen auf die Betätigungsspindel 90 des Ventils 9, so wird die Betätigungsspindel 90 in den Ventilkörper gedrückt bzw. aus ihrer Normalstellung in eine Endstellung verstellt. Sobald die Betätigungsspindel 90 die Endstellung erreicht hat, ist das Ventil 9 seinerseits geöffnet bzw. geschlossen und die Betätigungsspindel 90 kann nicht mehr weiter in Ventilbetätigungsrichtung 99 verstellt werden. Ein weiteres Drehen am Ausgleichsring 3 bewirkt nun, dass die Druckkappe 4 über den definierten Widerstand der gleichmässig angeordneten Vorsprünge 32 in radialer Richtung des Ausgleichsrings 3 hinweg aus dem Ausgleichsring 3 herausgedrückt wird. Die gleichmässig angeordneten Vorsprünge 32 in radialer Richtung des Ausgleichsrings 3 greifen nun in die axialen Führungsrillen 40 der Druckkappe 4 ein und Verhindern ein Verdrehen des Ausgleichsrings 3 relativ zu der Druckkappe 4 und dem Befestigungsring 2. Der Schliessmassausgleich ist nun eingestellt und fixiert.

Zu dem vorbeschriebenen Schliessmassadapter sind weitere konstruktive Variationen realisierbar. Insbesondere ist auch die Konstruktion eines Schliessmassadapters für Ventile mit einem Bajonett- oder Schnappverschluss denkbar.

## Patentansprüche

1. Schliessmassadapter (1) zum Ausgleich von in Ventilbetätigungsrichtung (99) unterschiedlichen Schliessmassen von Ventilen (9), mit einem auf einem Ventil (9) befestigbaren Befestigungsring (2), **dadurch gekennzeichnet, dass** der Schliessmassadapter (1) einen Ausgleichsring (3) umfasst, der einen Ventilantriebsitz (30) für einen Ventilantrieb (8) aufweist und in Ventilbetätigungsrichtung (99) verstellbar mit dem Befestigungsring (2) verbunden ist, so dass der Abstand zwischen dem Ventilantriebsitz (30) und dem Ventil (9) einstellbar ist, und der Schliessmassadapter (1) Mittel zur Fixierung (4, 22, 32) der gegenseitigen Position von Ausgleichsring (3) und Befestigungsring (2) umfasst.

2. Schliessmassadapter (1) nach Anspruch 1, bei dem der Befestigungsring (2) zur Befestigung auf dem Ventil (9) ein Gewinde (20) aufweist.

3. Schliessmassadapter (1) nach Anspruch 1 oder 2, bei dem der Ausgleichsring (3) in Ventilbetätigungsrichtung (99) über eine schiefe Ebene (21) verstellbar mit dem Befestigungsring (2) verbunden ist.

4. Schliessmassadapter (1) nach einem der Ansprüche 1 bis 3, bei dem der Ausgleichsring (3) und der Befestigungsring (2) über kooperierende Gewinde (21) oder Vorsprünge (31) miteinander verschraubbar sind.

5. Schliessmassadapter (1) nach einem der Ansprüche 1 bis 4, bei welchem der Schliessmassadapter (1) eine in Ventilbetätigungsrichtung (99) verstellbare Druckkappe (4) zur Ventilbetätigung umfasst.

6. Schliessmassadapter (1) nach Anspruch 5, bei dem die Druckkappe (4) relativ zum Befestigungsring (2) verdrehsicher angeordnet ist und Mittel aufweist, die nach dem Einstellen der gewünschten gegenseitigen Position von Ausgleichsring (3) und Befestigungsring (2) ein Verdrehen des Ausgleichsrings (3) relativ zu der Druckkappe (4) und dem Befestigungsring (2) verhindern.

7. Schliessmassadapter (1) nach Anspruch 5, bei dem die Druckkappe (4) axiale Führungsrillen (40) und der Ausgleichsring (3) gleichmässig angeordnete Vorsprünge (32) in radialer Richtung aufweist, die nach dem Einstellen der gewünschten gegenseitigen Position von Ausgleichsring (3) und Befestigungsring (2) in die axialen Führungsrillen (40) der Druckkappe (4) eingreifen.

8. Schliessmassadapter (1) nach Anspruch 6, bei dem die Druckkappe (4) mindestens einen nach aussen ragenden Vorsprung (41) aufweist, der ein Herausfallen der Druckkappe (4) aus dem Schliessmassadapter (1) verhindert.

9. Schliessmassadapter (1) nach einem der Ansprüche 1 bis 8, bei dem der Ausgleichsring (3) als Ventilantriebsitz einen Kragen (30) aufweist.

10. Verwendung eines mit einem Ventilantriebsitz (30) versehenen Schliessmassadapters (1) nach einem der Ansprüche 1 bis 9 zwischen einem Ventil (9) und einem Ventilantrieb (8) zum Einstellen des Abstands zwischen dem Ventilantriebsitz (30) und dem Ventil (9).

## Claims

1. Closure size adapter (1) for compensating closure sizes of valves (9) which vary in the valve-actuating direction (99), with a fastening ring (2), which is able to be fastened on a valve (9), **characterized in that** the closure size adapter (1) comprises a compensating ring (3), which has a valve drive seat (30) for a valve drive (8) and is adjustably connected to the fastening ring (2) in the valve-actuating direction (99), so that the distance between the valve drive seat (30) and the valve (9) is adjustable, and the closure size adapter (1) comprises means for fixing (4, 22, 32) the mutual position of the compensating ring (3) and the fastening ring (2).

2. Closure size adapter (1) according to claim 1, wherein the fastening ring (2) has a thread (20) for fastening on the valve (9).

3. Closure size adapter (1) according to claim 1 or 2, wherein the compensating ring (3) is adjustably connected to the fastening ring (2) in the valve-actuating direction (99) over an inclined plane (21).

4. Closure size adapter (1) according to any one of claims 1 to 3, wherein the compensating ring (3) and the fastening ring (2) are screwed together by cooperating threads (21) or projections (31).

5. Closure size adapter (1) according to any one of claims 1 to 4, wherein the closure size adapter (1) comprises a pressure cap (4) adjustable in the valve actuating direction (99) for valve actuation.

6. Closure size adapter (1) according to claim 5, wherein the pressure cap (4) is disposed in a rotatably fixed manner relative to the fastening ring (2) and has means which prevent turning of the compensating ring (3) relative to the pressure cap (4) and the fastening ring (2) after adjusting the desired mutual position of the compensating ring (3) and fastening ring (2).

7. Closure size adapter (1) according to claim 5, wherein the pressure cap (4) has axial guide grooves (40) and the compensating ring (3) has uniformly disposed projections (32) in the radial direction, which after adjusting the desired mutual position of the compensating ring (3) and fastening ring (2) engage in the axial guide grooves (40) of the pressure cap (4).

8. Closure size adapter (1) according to claim 6, wherein the pressure cap (4) has at least one outwardly protruding projection (41), which prevents the pressure cap (4) from falling out of the closure size adapter (1).

9. Closure size adapter (1) according to any one of claims 1 to 8, wherein the compensating ring (3) has a collar (30) as valve drive seat.

10. Use of a closure size adapter (1) provided with a valve drive seat (30) according to any one of claims 1 to 9 between a valve (9) and a valve drive (8) for adjusting the distance between the valve drive seat (30) and the valve (9).

## Revendications

1. Adaptateur dimensionnel de fermeture (1) pour la compensation, dans des valves (9), de différences de dimensions de fermeture dans la direction d'actionnement (99) de la valve, comprenant une bague de fixation (2) susceptible d'être fixée sur une valve (9), **caractérisé en ce que** l'adaptateur dimensionnel de fermeture (1) comprend une bague de compensation (3) qui comprend un siège d'entraînement de valve (30) pour un entraînement de valve (8) et qui est reliée à la bague de fixation (2) de manière réglable dans la direction d'actionnement (99) de la valve, de sorte que la distance entre le siège d'entraînement de valve (30) et la valve (9) est réglable, et l'adaptateur dimensionnel de fermeture (1) comprend des moyens pour la fixation (4, 22, 32) de la position réciproque de la bague de compensation (3) et de la bague de fixation (2).

2. Adaptateur dimensionnel (1) selon la revendication 1, dans lequel la bague de fixation (2) comprend un pas de vis (20) pour la fixation sur la valve (9).

3. Adaptateur dimensionnel (1) selon la revendication 1 ou 2, dans lequel la bague de compensation (3) est reliée à la bague de fixation (2) de manière réglable dans la direction d'actionnement (99) de la valve via un plan oblique (21).

4. Adaptateur dimensionnel (1) selon l'une des revendications 1 à 3, dans lequel la bague de compensation (3) et la bague de fixation (2) sont susceptibles d'être vissées ensemble via des pas de vis (21) ou des saillies (31) en coopération.

5. Adaptateur dimensionnel (1) selon l'une des revendications 1 à 4, dans lequel l'adaptateur dimensionnel (1) comprend une coiffe à pression (4), réglable dans la direction d'actionnement (99) de la valve en vue de l'actionnement de la valve.

6. Adaptateur dimensionnel (1) selon la revendication 5, dans lequel la coiffe à pression (4) est agencée sans possibilité de rotation par rapport à la bague de fixation (2) et comprend des moyens qui, après réglage de la position réciproque souhaitée de la bague de compensation (3) et de la bague de fixation (2), empêchent une rotation de la bague de compensation (3) par rapport à la coiffe à pression (4) et à la bague de fixation (2).

7. Adaptateur dimensionnel (1) selon la revendication 5, dans lequel la coiffe à pression (4) comporte des rainures de guidage axiales (40), et la bague de compensation (3) comporte des saillies (32) agencées régulièrement en direction radiale qui, après réglage de la position réciproque souhaitée de la bague de compensation (3) et de la bague de fixation (2), s'engagent dans les rainures de guidage axiales (40) de la coiffe à pression (4).

8. Adaptateur dimensionnel (1) selon la revendication 6, dans lequel la coiffe à pression (4) comporte au moins une saillie (41) en dépassement vers l'extérieur, qui empêche une chute de la coiffe à pression (4) hors de l'adaptateur dimensionnel (1).

9. Adaptateur dimensionnel (1) selon l'une des revendications 1 à 8, dans lequel la bague de compensation (3) comporte une collerette (30) à titre de siège pour entraînement de valve.

10. Utilisation d'un adaptateur dimensionnel (1) de fermeture pourvu d'un siège pour entraînement de valve (30) selon l'une des revendications 1 à 9 entre une valve (9) et un entraînement de valve (8) pour régler la distance entre le siège (30) pour entraînement de valve et la valve (9).
